# EUROPEAN PATENT APPLICATION

(11) **EP 2 602 105 A2**
(43) Date of publication of application: **12.06.2013**
(21) Application number: 12196088.4
(22) Date of filing: 07.12.2012
(51) Int. Cl.: B32B 7/12, B32B 19/00, H01B 3/04, H01B 3/42, H02K 3/30, C08F 283/01

(54) **Dry mica tape, electrically insulated coil using the same, and electrical rotating machine using the same**

(30) Priority: 07.12.2011 JP 2011267876
(71) Applicant: Hitachi Ltd., Tokyo (JP)
(72) Inventor: Morooka, Hisashi, Tokyo 100-8220 (JP); Ikeda, Kenji, Tokyo 100-8220 (JP); Iizuka, Motonobu, Tokyo 100-8220 (JP); Haraguchi, Yoshihiro, Tokyo 100-8220 (JP); Hiruta, Naohiro, Tokyo 100-8220 (JP); Maruyama, Shoichi, Tokyo 100-8220 (JP)
(74) Representative: Beetz & Partner

(57) **Abstract**

The purpose of the present invention is to provide a dry mica tape (10), and an electrically insulated coil (30, 40) using the same, and a electrical rotating machine using the same, with reduced amount of VOC (Volatile Organic Compound) generated during manufacturing thereof, while both of excellent impregnation property and excellent heat resistance are achieved. The dry mica tape (10), and the electrically insulated coil (30) using the same, and the electrical rotating machine using the same, the dry mica tape including mica, a substrate, an adhesive (3) which glues the mica (1) and the substrate (2) together, in which the adhesive (3) includes unsaturated polyester compound which has a reactive double bond.

## Description

### {Technical Field}

The present invention relates to a dry mica tape, an electrically insulated coil using the same, and a electrical rotating machine using the same.

### {Background Art}

There have been used more and more thermosetting resins having excellent mechanical properties as well as high electrical insulation for insulating and fixing coils in electrical equipment such as electrical generators, motors, transformers, and the like. For example, mica tapes having high insulation reliability have been often used for insulating high-voltage electrical rotating machine such as generators and general industrial large motors.

For example, a mica tape (so-called dry mica tape) is used for a stator coil which constitutes the electrical rotating machine. As a specific method for manufacturing the stator coil, for example, the following method is mentioned. First, a unit electrically insulated coil is made by winding the dry mica tape around an insulation-coated conductor. Then, varnish is impregnated into the unit electrically insulated coil with vacuum pressure, and is thermally cured to make an electrically insulated coil. Finally, the stator coil is manufactured by accommodating and fixing the electrically insulated coils to iron core slots.

As the other method of manufacturing the stator coil, the unit electrically insulated coil is made by winding the dry mica tape around the insulation-coated conductor. Then, a unit stator coil is manufactured by embedding the unit electrically insulated coil into the iron core slot, and fixing it in the slot, and then integrally connecting it at an outer end portion of the iron core. Finally, the varnish is impregnated into the stator coil unit with vacuum pressure, and is thermally cured to manufacture the stator coil. As the varnish to be used in this case, the thermosetting resin such as epoxy resin and unsaturated polyester resin is used.

In Patent Document 1, it is described that a ground insulating layer of the generator is formed by thermal curing after vacuum pressure impregnation of epoxy resin, unsaturated polyester resin, or the like.

In recent years, social concern for environmental problems has been increased, and reducing a burden on the environment has been also required for insulation materials which are used in the electrical rotating machine such as motors and generators. To meet such a requirement, unsaturated polyester resin compositions which can reduce an amount of Volatile Organic Compounds (referred to as "VOC", hereinafter) being generated in a process of electrical insulation treatment, are described in Patent Document 2.

### {Citation List}

### {Patent Literature}

{Patent Document 1}
   Japanese Patent Application Publication No. S63-089033
{Patent Document 2}
   Japanese Patent Application Publication No. 2009-117335 {Summary of Invention}

### {Technical Problem}

The dry mica tape has preferably an excellent impregnation property of varnish when the dry mica tape is impregnated with the varnish. The dry mica tape is uniformly impregnated with the varnish because the varnish has the excellent impregnation property. As a result, an insulating layer formed by curing the varnish can be suppressed from generating voids, thereby exhibiting the excellent insulation property.

However, the Patent Documents described above have the following problems. The electrical rotating machine is requested to have high heat resistance in some cases, because it may become high in temperature. However, the heat resistance is not particularly taken into consideration in a technology described in Patent Document 1. This means that both the impregnation property and the heat resistance cannot be necessarily satisfied according to the technology described in Patent Document 1.

An acrylic compound monomer is mentioned as a suitable example of a reactive unsaturated monomer in a technology described in Patent Document 2. However, when the acrylic compound monomer is used, there is a tendency that a molecular weight is larger than that of conventionally used styrene. For this reason, there is a problem that a viscosity of the monomer increases in room temperature, and thus the impregnation property is reduced.

In addition, when the dry mica tape is impregnated with the varnish, a reactive diluent such as styrene is used in some conventional technologies. As a result, it may be difficult to reduce the VOC during the manufacturing thereof.

The present invention is devised in view of the above problems, and the object is to provide a dry mica tape with a reduced amount of the VOC generated during the manufacturing thereof, an electrically insulated coil using the same, and a electrical rotating machine using the same, while both the excellent impregnation property and the excellent heat resistance are achieved.

### {Solution to Problem}

As a result of intensive studies to solve the above problems, the inventors found that the above problems can be solved by impregnating the dry mica tape with unsaturated polyester compound having a specific structure, and have completed the present invention.

### {Advantageous Effects of Invention}

According to the present invention, a dry mica tape with reduced amount of the VOC generated during the manufacturing thereof, an electrically insulated coil using the same, and a electrical rotating machine using the same can be provided, while both the excellent impregnation property and the excellent heat resistance are achieved.

### {Brief Description of Drawings}

FIG. 1 is a view schematically showing a dry mica tape according to an embodiment of the present invention.
FIGS. 2A and 2B are views schematically showing an electrically insulated coil according to the embodiment of the present invention.
FIGS. 3A and 3B are views schematically showing a stator coil according to the embodiment of the present invention.
FIGS. 4A and 4B are views schematically showing another stator coil according to the embodiment of the present invention.

### {Description of Embodiments}

An embodiment (present embodiment) to perform the present invention will be explained hereinafter with appropriate reference to the accompanying drawings.

### [1. Dry Mica Tape]

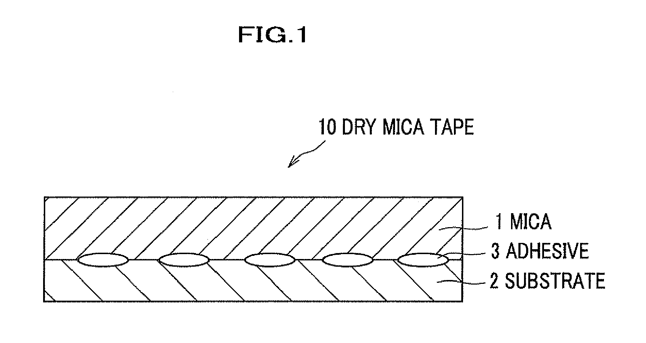

FIG. 1 is a view schematically showing a cross-section of a dry mica tape 10 according to the present embodiment. As shown in FIG. 1, the dry mica tape 10 is configured to include mica 1, a substrate 2, and an adhesive 3 which glues the mica 1 and the substrate 2 together. The dry mica tape 10 has a shape of tape, which is easy to be wound around a conductor and the like (details will be described later).

What is called mica paper scrolled in a shape of paper is used as the mica 1, and the mica 1 is reinforced by being glued to the substrate 2 because the mica paper is usually brittle. The mica 1 is what is referred to as "mica" so-called. Although a form of the mica 1 is not particularly limited, mica paper is used in the dry mica tape 10. However, mica flake can be used as the mica 1 depending on, for example, usages and manufacturing methods of insulation materials. In addition, particle sizes of the mica paper and the mica flake can also be appropriately set depending on, for example, the usages of the dry mica tape and the manufacturing methods of the insulation materials.

The substrate 2 is adapted to secure the brittle mica 1. In other words, the substrate 2 is used as a reinforced material of the mica 1. As for the substrate 2, for example, inorganic substrates such as glass cloth, and organic substrates such as polyethylene terephthalate film, polyimide film, can be applicable in accordance with, for example, the heat resistance and insulation specifications. In addition, the substrate 2 can be, for example, in a film shape or a tape shape.

The adhesive 3 is adapted to glue the mica 1 and the substrate 2 together. Therefore, the adhesive 3 contains a material (component) which is able to glue the mica 1 and the substrate 2 together. More specifically, the unsaturated polyester compound having a reactive double bond is contained in the adhesive 3. Since the adhesive 3 contains such unsaturated polyester compound, the adhesive 3 can react with the varnish (impregnating varnish) described later, to form a coil insulating layer and an adhesive layer which are excellent in heat resistance, mechanical properties, and the like.

Physical properties of such unsaturated polyester compound are not particularly limited. However, there is a possibility that the impregnation property of the varnish is reduced when a viscosity of the adhesive 3 which contains the unsaturated polyester compound is too high. Therefore, a number average molecular weight of the unsaturated polyester compound contained in the adhesive 3 is preferably at least 500, more preferably at least 600, and an upper limit thereof is preferably not more than 1500, more preferably not more than 1300. By using such unsaturated polyester compound, the dry mica tape can be fixed with lesser amount of varnish (more specifically, reactive diluent in the varnish). Here, as the reactive diluent in the varnish, for example, the above mentioned acrylic compound monomer can be preferably used. The number average molecular weight of the unsaturated polyester compound can be measured by using a gel permeation chromatography.

Although the reactive double bond contained in the unsaturated polyester compound is not particularly limited, the reactive double bond is preferably the double bond which is formed between two carbon atoms. Further, such unsaturated polyester compound is preferably an aliphatic compound.

The unsaturated polyester compound may be a commercially available product, or may be prepared so as to have desired physical properties. When the unsaturated polyester compound is prepared, the unsaturated polyester compound is obtained, for example, by polycondensation of polycarboxylic acid which has an unsaturated bond in a molecule and polyol. As specific examples of the polycarboxylic acid having the unsaturated bond, a fumaric acid, a maleic acid, an itaconic acid, and the like are preferably used. As specific examples of polyol, an ethylene glycol and the like are preferably mentioned.

The unsaturated polyester compound may be a modified unsaturated epoxy-polyester compound having an epoxy group which is introduced to the unsaturated polyester compound.

The dry mica tape 10 may include materials other than the mica 1, the substrate 2, and the adhesive 3. For example, a curing accelerator may be included. The curing accelerator may be an accelerator which is able to polymerize the reactive double bond. The curing accelerator may include, for example, organic peroxide such as benzoyl peroxides and dicumyl peroxides, and may further include boron compound such as dimethyl methoxy boranes. By including such a curing accelerator in the dry mica tape 10, the dry mica tape 10 can be cured uniformly when it is cured after being impregnated with the varnish.

### [2. Effect achieved by Dry Mica Tape 10]

The dry mica tape is laminated with mica which is the insulation material on a surface thereof. Therefore, the dry mica tape is particularly suitable for usages where insulation property is required. More specifically, for example, a wire conductor is wound with the dry mica tape, and then the varnish is cured after the dry mica tape is impregnated with the varnish from the outer surface thereof. This allows the conductor to have the insulation property while the dry mica tape is fixed to the conductor.

When the dry mica tape which is wound around the conductor is impregnated with the varnish, it is preferable that the dry mica tape is sufficiently impregnated with the varnish from the viewpoint of improving the insulation property. This allows an insulating layer formed by curing the varnish to be prevented from having voids (defects). For this reason, the viscosity of the varnish is preferably so low that the dry mica tape is easily impregnated with the varnish.

On the other hand, the varnish having high heat resistance is required to be used, when the heat resistance of the dry mica tape and the conductor (i.e., the conductor having the insulation property) which are impregnated with the varnish is attempted to be improved. However, the viscosity of the varnish generally tends to lower if the heat resistance of the varnish lowers. This means that the heat resistance is reduced if the impregnation property of the varnish is improved, and the impregnation property is reduced if the heat resistance of the varnish is improved. In other words, it is difficult to achieve both the excellent impregnation property and the excellent heat resistance.

The varnish may be, for example, an epoxy varnish, and an unsaturated polyester varnish containing resin such as unsaturated polyester compound and reactive diluent (low viscosity liquid such as styrene). Upon the use of the dry mica tape mentioned above in the present invention, the varnish is preferably the unsaturated polyester varnish, and more preferably the varnish containing the same compound with the unsaturated polyester compound which is contained in the dry mica tape among others. In addition, the curing accelerator described above is also contained in the varnish as necessary. As described above, the insulating layer is formed as follows. The mica tape is impregnated with the varnish, and both the varnish and the unsaturated polyester varnish which is used as the adhesive in the dry mica tape are cured to be fixed together by being polymerized in the mixed state of the both.

The viscosity of the varnish can be changed by changing an amount of the reactive diluent contained in the varnish. In other words, if the excellent impregnation property is desired, the amount of the reactive diluent should be increased to decrease the viscosity of the varnish. However, if too large amount of the reactive diluent is included, a crosslink density of the cured resin which is obtained after heating becomes low, and the heat resistance thereof becomes worse.

Therefore, as mentioned before, it is difficult to achieve both the excellent impregnation property and the excellent heat resistance at the same time simply by changing the amount of the reactive diluent. Thus, the dry mica tape according to the present embodiment has been devised. The dry mica tape according to the present embodiment contains the unsaturated polyester compound having the reactive double bonds in advance, and the unsaturated polyester compound is mixed with the impregnating varnish, and then the insulating layer is formed by reacting and curing the mixture. Therefore, the amount of the resin such as unsaturated polyester compound contained in the varnish can be decreased.

Therefore, the amount of the reactive diluent in the varnish can be relatively increased compared to the resin, and the viscosity of the varnish can be decreased. As a result, the impregnation property of the varnish is improved. Further, an absolute amount of the varnish can be decreased because the relative amount of the reactive diluent in the varnish is increased. As a result, a use amount of the volatile organic compounds such as styrene can be decreased.

Even if the amount of the reactive diluent in the varnish is relatively increased, the amount of the unsaturated polyester compound is not changed as a whole after the dry mica tape is impregnated with the varnish, because the dry mica tape according to the present embodiment contains the unsaturated polyester compound in advance. This means that the insulating layer finally obtained by heating and curing can have the excellent heat resistance.

The viscosity of the varnish usually lowers by raising the temperature. As described above, since the varnish preferably applicable to the dry mica tape according to the present embodiment contains relatively large amount of the reactive diluent, the viscosity of the varnish has been already decreased. Therefore, when the temperature of the varnish is raised in order to improve the impregnation property, a desired viscosity is obtained at a temperature lower than that of a conventional varnish. In other words, the excellent impregnation property can be achieved with less amount of energy compared to the conventional varnish.

As described above, the viscosity of the varnish preferably applicable to the dry mica tape according to the present embodiment is not specifically limited, but the viscosity of the varnish is preferably not more than 0.5 Pa·s at 40 °C. By using the varnish with such a viscosity, more excellent impregnation is achieved compared to the conventional varnish.

In addition, the varnish applicable to the dry mica tape according to the present embodiment preferably does not substantially include styrene. Here, "not substantially" means that the content amount hardly contributes to physical properties of the insulating layer obtained by curing. More specifically, the content of the styrene is preferably not more than 1% by weight in the total amount of the varnish. By using such a varnish, the amount of used styrene as the VOC can be reduced.

### [3. Application Example of Dry Mica Tape 10]

The dry mica tape 10 according to the present embodiment can be used in a variety of applications. Hereinafter, usage examples will be explained with reference to specific examples.

### [3-1. Electrically insulated coil]

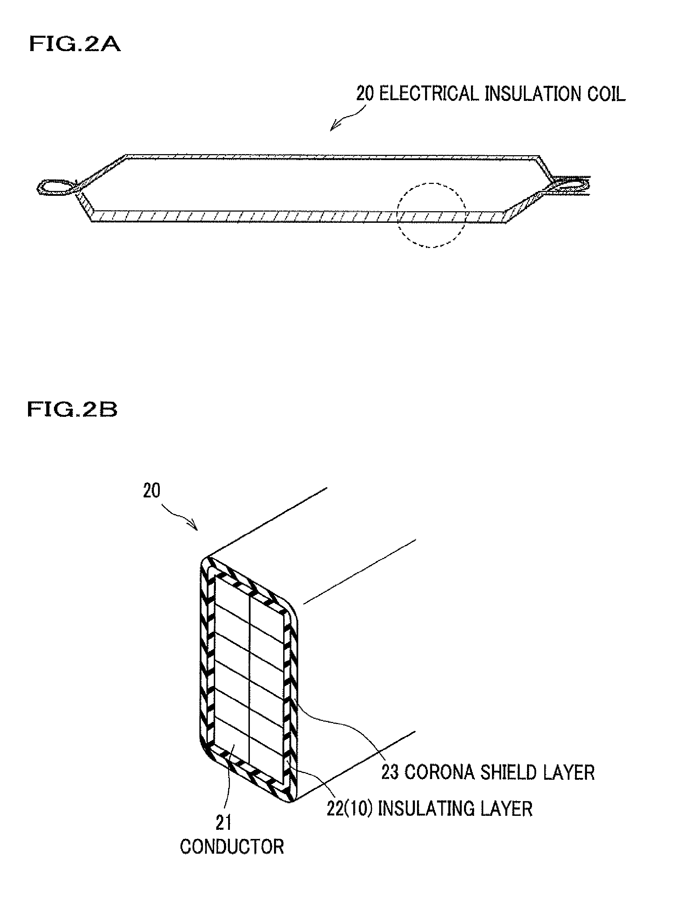

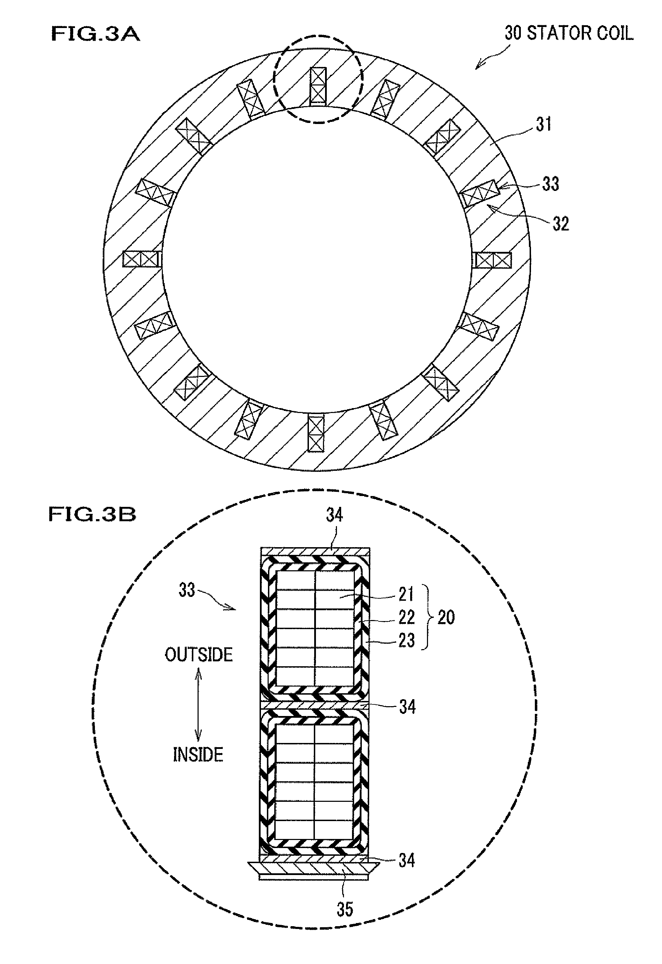

An electrically insulated coil 20 manufactured by using the dry mica tape 10 is shown in FIGS. 2A and 2B. FIG. 2A shows the electrically insulated coil 20 applicable to a stator coil 30 (see FIGS. 3A and 3B) which is described later. An upper portion and a lower portion of the electrically insulated coil 20 in FIG. 2A are accommodated in iron core slots 32 which are described later. In other words, the electrically insulated coil 20 shown in FIG. 2A is a view seen from the radial direction of the stator coil 30 when the electrically insulated coil 20 is accommodated in the stator coil 30. A specific accommodation position when the electrically insulated coil 20 is accommodated in the iron core slot 32 will be described later with reference to FIGS. 3A and 3B.

The unit electrically insulated coil 20 has a couple of end portions in a lateral direction of FIG. 2A, and one end portion (the left side of FIG. 2A) of the electrically insulated coil 20 is formed by being twisted and exists on the outside the stator coil 30. The other end (the right side of FIG. 2A) of the electrically insulated coil 20 is also formed by being twisted. Further, the other end portion (i.e., an exposed surface of a conductor 21 described later) of the electrically insulated coil 20 is exposed on the outside of the stator coil 30. An external power supply, a battery, and the like are configured to be connected to the end portion, to be driven as electrical rotating machines.

FIG. 2B shows an enlarged cross-sectional view of a portion of a dashed line in FIG. 2A. As shown in FIG. 2B, the electrically insulated coil 20 is constituted by a conductor 21, an insulating layer 22, and a corona shield layer 23. In the present embodiment, the dry mica tape 10 is applied to the insulating layer 22. It should be noted that the conductors 21 are insulated from one another by resin materials, for example. In other words, respective insulated conductors 21 are included inside of the insulating layer 22.

The unit electrically insulated coil is obtained by winding the dry mica tape 10 around the conductor 21 (such as metal wires) having a rectangular cross-section. A semi-conductive tape is further wound around a surface of the obtained unit electrically insulated coil. In other words, the surface of the conductor 21 is wound around with the dry mica tape and the semi-conductive tape.

The conductor 21 in this state is impregnated with the unsaturated polyester compound by a vacuum impregnation or the like, and is heated to be cured. In this manner, the electrically insulated coil 20, in which the insulating layer 22 and the corona shield layer 23 are formed on the surface of the conductor 21, is obtained. The corona shield layer 23 has a function of preventing a partial discharge from being generated by a potential difference between the insulating layer 22 and the slot of the stator coil, when the electrically insulated coil 20 is attached to the slots of the stator coil.

### [3-2. Stator Coil]

FIGS. 3A and 3B show the stator coil 30 manufactured by using the dry mica tape 10. This means that FIGS. 3A and 3B show the stator coil 30 manufactured by using the above electrically insulated coil 20. FIG. 3B shows an enlarged view of a portion of a dashed line in FIG. 3A. An iron core 31 is omitted in FIG. 3B for simplicity of illustration. As shown in FIG. 3A, the stator coil 30 is constituted by the iron core 31 and coils 33 which are respectively secured to iron slots 32.

Although not shown, in the stator coil 30, a coil 33 is formed by winding the electrically insulated coil 20 through two iron core slots.

FIG. 3B is a view showing the coil 33 which is secured to the iron core slot 32. The coil 33 is constituted by two electrically insulated coils 20 and three under-cover liners 34, which are alternately stacked. After the coil 33 is fitted into the slots 32, the coil 33 is secured to the iron core slot 32 by a cover 35.

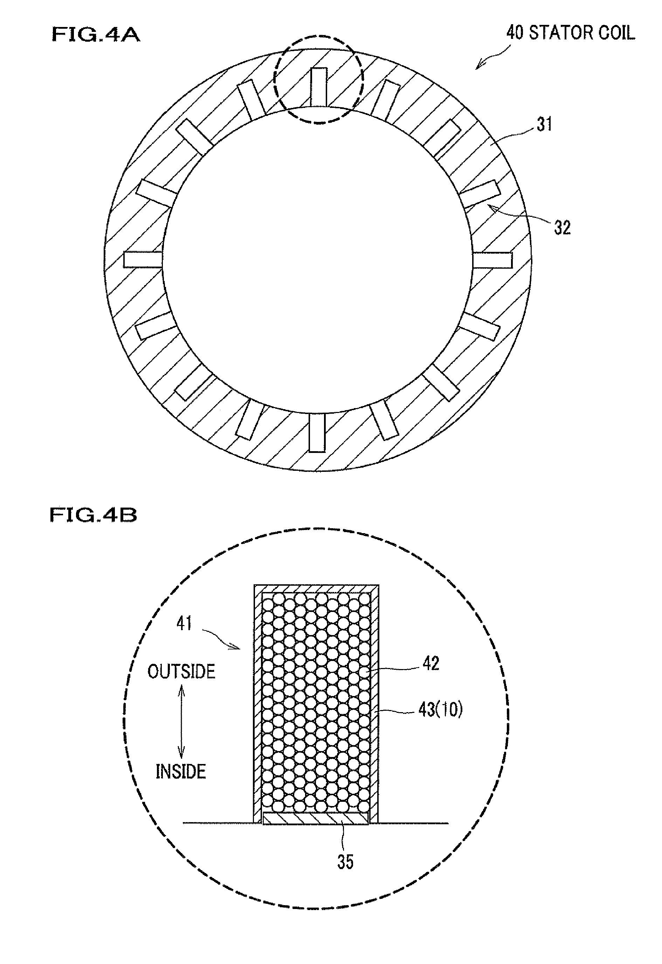

FIGS. 4A and 4B are views showing another form of the stator coil. The members indicating the same as those in FIGS. 3A and 3B are denoted by the same reference signs with those in FIGS. 3A and 3B, and the detailed explanation thereof will be omitted. A stator coil 40 shown in FIG. 4A is different from the stator coil 30 shown in FIG. 3A, and coils 41 (see FIG. 4B) are secured to the iron core slots 32.

The coil 41 is formed by winding a conductor 42 through the iron core slots in the same manner as the stator coil 30. The coil 41 is omitted in FIG. 4A for simplicity of illustration. On the other hand, the iron core 31 is omitted in FIG. 4B for simplicity of illustration.

As shown in FIG. 4B, the coil 41 is configured to include a plurality of conductors 42 and an insulation material 43 which prevents the conductors 42 from being in contact with the iron core 31. After the coil 41 is fitted into the slot 32, the coil 41 is secured to the iron core slot 32 by the cover 35 in the same manner as the stator coil 30. In addition, an enamel layer is provided on a surface of the conductor 42, and respective conductors 42 are in a state of being insulated from one another. In the present embodiment, the insulation material 43 is referred to as a slot liner, and an aramid paper, a laminated material of the aramid paper with a polyester film, and the like are applied to the slot liner. In this case, the aramid paper can be coated in advance with the varnish which is constituted by the reactive diluent and the same component as the adhesive 3 which is used to glue the mica 1 and the substrate 2 of the dry mica tape together. Here, the same component as the adhesive 3 is the unsaturated polyester compound having the reactive double bond. As a consequence, similar to the case in which the insulating layer is formed by using the dry mica tape, improvements of both the impregnation property of the varnish and the heat resistance of the insulating layer are achieved. Furthermore, it is possible to obtain an effect of reducing an amount of VOC volatilization during manufacturing.

### [3-3. Electrical rotating machine]

The electrical rotating machines such as generators and motors can be manufactured by using the stator coils shown in FIGS. 3A, 3B, 4A, 4B. The electrical rotating machine is mainly constituted by a rotor coil and the stator coil. The rotor coil and the stator coil are the same with the coils described above. In a case that the electrical rotating machine is the generator, the current can be obtained from the stator coil by rotating the rotor coil by motive power (steam, for example) from the outside. In a case that the electrical rotating machine is the motor, the motive power can be supplied to the outside by causing the current to the stator coil to rotate the rotor coil as described above.

### (Examples)

Hereinafter, the present embodiment will be explained by showing examples.

### <Manufacturing of Dry Mica Tape>

The dry mica tape shown in FIG. 1 was produced by using materials shown in Table 1 below.

**[Table 1]**

| | Example 1 | Example 2 | Comparison Example 1 |
|---|---|---|---|
| Mica | Mica paper | Mica paper | Mica paper |
| Substrate | Polyethylene terephthalate film | Polyimide film | Polyethylene terephthalate film |
| Adhesive | Unsaturated polyester compound "A" | Modified unsaturated epoxy-polyester compound "B" | Silicone resin |

The unsaturated polyester compound "A" which was used in Example 1 includes a bisphenol-A skeleton in a molecule, and is the unsaturated polyester compound having a number average molecular weight of 1500. The number average molecular weight was measured by gel permeation chromatography (GPC), and was converted to a value by using polystyrene as a molecular weight standard material. In the following, the number average molecular weight is obtained in the same way, unless otherwise specified.

The modified unsaturated epoxy-polyester compound "B" which was used in Example 2 includes a bisphenol-A skeleton in a molecule, and is the modified unsaturated epoxy-polyester compound having a number average molecular weight of 1600.

The silicone resin which was used in Comparison Example 1 was cured during manufacturing of the dry mica tape, and does not cause radical polymerization reactions with an unsaturated polyester varnish (described later) used as the varnish.

### <Manufacturing of Electrically insulated coil>

The electrically insulated coil shown in FIGS. 2A and 2B was manufactured by respectively using the dry mica tape of the above Example 1, Example 2, and Comparison Example 1. Materials shown in Table 2 below were used during manufacturing.

**[Table 2]**

| | Example 3 | Example 4 | Comparison Example 2 | Comparison Example 3 | Comparison Example 4 |
|---|---|---|---|---|---|
| Dry mica tape | Example 1 | Example 2 | Comparison Example 1 | Comparison Example 1 | Comparison Example 1 |
| Varnish | Unsaturated polyester varnish "C" | Unsaturated polyester varnish "D" | Unsaturated polyester varnish "C" | Unsaturated polyester varnish "E" | Unsaturated polyester varnish "F" |

Compositions of unsaturated polyester varnish "C" to "F" as the varnish shown in Table 2 are shown in Table 3 below.

**[Table 3]**

| Varnish | Unsaturated polyester varnish "C" | Unsaturated polyester varnish "D" | Unsaturated polyester varnish "E" | Unsaturated polyester varnish "F" |
|---|---|---|---|---|
| Unsaturated polyester compound | 20 parts by weight | 20 parts by weight | 50 parts by weight | 50 parts by weight |
| Reactive diluent | 80 parts by weight | 80 parts by weight | 50 parts by weight | 50 parts by weight (Styrene) |
| Viscosity at 40 °C (mPa·s) | 200 | 250 | 800 | 200 |
| VOC Volatilization rate | 0.9 | 0.7 | 0.8 | 50 |

For the preparation of the unsaturated polyester varnish "C" to "F", the same unsaturated polyester compound with the unsaturated polyester compound contained in the impregnated dry mica tape (Example 1, Example 2, and Comparison Example 1) was used. Epoxy resin was used as the reactive diluent contained in the unsaturated polyester varnish "C" to "E", and styrene was used as the reactive diluent contained in the unsaturated polyester varnish "F".

VOC Volatilization rate in Table 3 was evaluated by weight loss rate after curing the unsaturated polyester varnish at 160 °C for 1 hour. Here, the unsaturated polyester varnish for the evaluation was prepared by adding 1 part by weight of benzoyl peroxide as a curing accelerator to 100 parts by weight of the varnish in Table 3, and then about 3 g thereof were placed in an aluminum Petri dish of 50 mmϕ (ϕ represents a diameter) to be cured.

Next, a specific manufacturing method of the electrically insulated coil is explained. As for the electrically insulated coil of Example 3, the unit electrically insulated coil was manufactured by winding the dry mica tape (0.15 mm thickness, 25 mm width) having the configuration of Example 1 by 10 layers partially-overlapped around an insulation coated conductor which is molded in a predetermined shape. The unit electrically insulated coil was placed in an impregnation bath which was maintained at 25 °C, and then the unsaturated polyester varnish "C" as the varnish was impregnated in vacuum at 380 Pa for 1 hour, and was further impregnated under pressure at 0.4 MPa for 5 hours. Then, the varnish was heated and cured at 160 °C for 1 hour to manufacture the electrically insulated coil of Example 3.

The electrically insulated coil of Example 4 was manufactured in the same manner as in Example 3, except for using the dry mica tape (0.15 mm thickness, 25 mm width) of Example 2 and using the unsaturated polyester varnish "D" as the varnish.

The electrically insulated coil of Comparison Example 2 was manufactured in the same manner as in Example 3, except for using the dry mica tape (0.15 mm thickness, 25 mm width) of Comparison Example 1.

The electrically insulated coil of Comparison Example 3 was manufactured in the same manner as in Example 3, except for using the dry mica tape (0.15 mm thickness, 25 mm width) of Comparison Example 1 and using the unsaturated polyester varnish "E" as the varnish.

The electrically insulated coil of Comparison Example 4 was manufactured in the same manner as in Example 3, except for using the dry mica tape (0.15 mm thickness, 25 mm width) of Comparison Example 1 and using the unsaturated polyester varnish "F" as the varnish.

For each electrically insulated coil (Example 3, Example 4, and Comparison Examples 2 to 4) manufactured by the method described above, tan δ (dielectric tangent) was measured. The applied voltage was set at 1kV and the temperature was set at 100 °C during the measurement. Table 4 below shows the results obtained.

**[Table 4]**

| | Example 3 | Example 4 | Comparison Example 2 | Comparison Example 3 | Comparison Example 4 |
|---|---|---|---|---|---|
| tan δ (%) at 100 °C | 13.5 | 13.8 | 16.9 | 17.1 | 12.8 |

The tan δ (dielectric tangent) is an index representing the magnitude of the dielectric loss. Therefore, the smaller tan δ, the better. As shown in Table 4, Examples 3 and 4 which use the dry mica tape (Examples 1 and 2) according to the present embodiment showed good values of the dielectric loss. On the other hand, Comparison examples 2 and 3 which use the dry mica tape of Comparison Example 1 shows larger values than those of Examples 3 and 4, and shows poor results. As for the results, in Comparison Example 2, it is considered that the glass transition temperature of the resin after curing was lowered and the dielectric loss became larger, because the dry mica tape of Comparison example 1 was used.

In Comparison Example 3, it is considered that the varnish was not sufficiently impregnated into the dry mica tape, because the unsaturated polyester varnish "E" was used as the varnish.

In Comparison Example 4, the value of the tan δ was substantially the same as in Comparison Examples 3 and 4. However, the VOC volatilization rate was extremely high as shown in FIG. 3.

These results show that the electrically insulated coil having the excellent insulation reliability can be obtained by using the dry mica tape according to the present embodiment which can achieve both the improvement of the impregnation property of the varnish and the improvement of the heat resistance of the insulating layer. These results also show that the amount of the VOC volatilization can be reduced by using the dry mica tape according to the present embodiment, because the VOC such as styrene is not used during manufacturing thereof.

### <Manufacturing of Stator Coil>

Next, the stator coil shown in FIG. 3 was manufactured by using the dry mica tape of Example 1. More specifically, at first, the unit electrically insulated coil (i.e., the electrically insulated coil before the impregnation by the varnish) was manufactured in the same manner as in Example 3. The unit electrically insulated coil was fitted into the iron core slot 32 of the iron core 31, and then the unit stator coil was manufactured by inserting the under-cover liner 34 and the cover 35 respectively for securing the unit electrically insulated coil. The stator coil 30 of Example 5 was manufactured by placing the unit stator coil in the impregnation bath which is kept at 25 °C, and by using the same varnish as in Example 3 under the same impregnation condition and heat curing condition as in Example 3.

The stator coil of Example 6 was manufactured in the same manner as in Example 5 except for using the dry mica tape of Example 2.

The tan δ was measured for the stator coils manufactured in Examples 5 and 6. Table 5 below shows the results.

**[Table 5]**

| | Example 5 | Example 6 |
|---|---|---|
| Dry mica tape | Example 1 | Example 2 |
| Varnish | Unsaturated polyester varnish "C" | Unsaturated polyester varnish "D" |
| tan δ (%) at 100 °C | 12 | 12.8 |

As shown in Table 5, the tan δ of the stator coils of Examples 5 and 6 shows good values in the same manner as in Examples 3 and 4 (see Table 4). These results show that the stator coil having the excellent insulation reliability can be obtained by using the dry mica tape which can achieve both the improvement of the impregnation property of the varnish and the improvement of the heat resistance of the insulating layer.

### <Manufacturing of Electrical rotating machine>

Although not shown, a electrical rotating machine was manufactured by using the stator coil according to the present embodiment described above. As a result, the electrical rotating machine having excellent insulation reliability was obtained.

The electrical rotating machine was manufactured by using the stator coil shown in FIG. 4. In the electrical rotating machine, comprising a cylindrical stator iron core, a rotor which rotates coaxially at inner peripheral side of the cylindrical stator iron core, a slot which holds a conductive wire provided on the stator iron core, and a coil which is formed by winding the conductive wire after inserting a slot liner into the slot, wherein the electrical rotating machine is manufactured by impregnating the coil with unsaturated polyester varnish "C" and curing the coil, the electrical rotating machine according to the present invention can be manufactured by adding the slot liner with unsaturated polyester compound "A" before the coil is impregnated with the unsaturated polyester varnish "C". The stator coil according to the present invention was obtained by heating and curing the varnish at 160 °C for 1 hour after impregnating the unsaturated polyester varnish "C" by a dripping method. The electrical rotating machine 14 was further manufactured by assembling and wiring the stator coil, the rotor, and the like. The electrical rotating machine having the excellent insulation reliability was obtained by using the stator having the high heat resistance and the excellent insulation reliability, because the impregnating unsaturated polyester varnish "C" was reacted with the unsaturated polyester compound "A" added to the slot liner and was cured. The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

### {Reference Signs List}

- 1:: mica
- 2:: substrate
- 3:: adhesive
- 10:: dry mica tape
- 20:: electrically insulated coil
- 30, 40:: stator coil

## Claims

1. A dry mica tape, comprising
Mica (1), a substrate (2), and an adhesive (3) which glues the mica (1) and the substrate (2) together, wherein
the adhesive (3) includes unsaturated polyester compound which has a reactive double bond.

2. The dry mica tape as set forth in claim 1, wherein the reactive double bond is a double bond formed between two carbon atoms, and is an aliphatic carbon-carbon double bond.

3. An electrically insulated coil, comprising a member which is prepared by impregnating unsaturated polyester varnish which contains not more than 1 % by weight of styrene in a total amount of the varnish, into the dry mica tape (20) as set forth in claim 1 or 2, and by curing the varnish.

4. The electrically insulated coil as set forth in claim 3, wherein a viscosity of the unsaturated polyester varnish is not more than 0.5 Pa·s at 40 °C.

5. A electrical rotating machine, comprising
a stator coil (30, 40) and a rotor coil, wherein
the stator coil (30, 40) and the rotor coil have the electrically insulated coils (20) as set forth in claim 3 or 4.

6. The electrical rotating machine, comprising
a cylindrical stator iron core (31),
a rotor which rotates coaxially at inner peripheral side of the stator iron core (31),
slots (32) which holds a conductive wire provided on the stator iron core (31), and
a coil (30) which is formed by winding the conductive wire by inserting a slot liner (34) into the slot (32), wherein
the electrical rotating machine is manufactured by impregnating the coil (30) with unsaturated polyester varnish and curing the varnish, wherein
the slot liner (34) is added with unsaturated polyester compound which has the reactive double bond before the coil is impregnated with the unsaturated polyester varnish.
